(19) Europäisches Patentamt
European Patent Office
Office européen des brevets

(11) Veröffentlichungsnummer: **0 158 099**
**B1**

(12) # EUROPÄISCHE PATENTSCHRIFT

(45) Veröffentlichungstag der Patentschrift: **19.07.89**

(51) Int. Cl.4: **C 09 D 5/38**, C 09 D 3/64, C 09 D 3/80

(21) Anmeldenummer: **85102294.7**

(22) Anmeldetag: **01.03.85**

(54) **Verfahren zur Herstellung von wässrigen Dispersionen und deren Verwendung zur Herstellung von Metalleffektlackierungen.**

(30) Priorität: **13.03.84 DE 3409080**

(43) Veröffentlichungstag der Anmeldung: **16.10.85 Patentblatt 85/42**

(45) Bekanntmachung des Hinweises auf die Patenterteilung: **19.07.89 Patentblatt 89/29**

(84) Benannte Vertragsstaaten: **AT BE DE FR GB IT NL SE**

(56) Entgegenhaltungen:
EP-A- 0 021 414
EP-A- 0 038 127
EP-A- 0 069 936
DE-A- 2 938 308
DE-A- 3 321 180
US-A- 3 918 984

(73) Patentinhaber: **BAYER AG**

**D-5090 Leverkusen 1 Bayerwerk (DE)**

(72) Erfinder: **Stahl, Hans-Georg, Dr.**
**Theodor-Wabnitz-Strasse 22**
**D-2900 Oldenburg (DE)**
Erfinder: **Schwindt, Jürgen, Dr.**
**H.-T.-v.-Böttinger-Strasse 14**
**D-5090 Leverkusen (DE)**
Erfinder: **Nachtkamp, Klaus, Dr.**
**Leuchterstrasse 112**
**D-5000 Köln 80 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Herstellung eines wäßrigen Metalleffekt-Basislacks auf Basis einer Polyester- oder Alkydharzdispersion und Aluminiumbronze, sowie die Verwendung dieser Dispersionen zur Herstellung von Metalleffektlackierungen.

Metalleffektlackierungen erfreuen sich großer Beliebtheit, insbesondere bei den Käufern von Kraftfahrzeugen. Zur Beschichtung bedient man sich dabei vornehmlich des Zweischicht-Naß-in-Naß-Lackierverfahrens, wobei zunächst ein pigmentierter, Aluminiumbronze enthaltender Basislack aufgespritzt wird, der nach kurzer Zwischenablüftung ohne zwischenzeitliches Einbrennen mit einem Klarlack überspritzt wird. Beide Schichten werden anschließend gemeinsam eingebrannt. Dieses Zweischicht-Lackierverfahren vereinigt Produktionssicherheit mit hoher technischer Qualität der erhaltenen Lackierungen. Im Hinblick auf Umweltschutz und Rohstoffkosten ist es erwünscht, die Lacke in Form wäßriger Dispersionen einzusetzen.

Hauptproblem der Metalleffekt-Zweischicht-Lackierung bei Verwendung wäßriger Dispersionen ist eine verminderte Haftung des Klarlacks auf dem Basislack und ein ungleichmäßiger Metalleffekt.

Zu beachten ist weiterhin, daß zur Lösung des erfindungsgemäßen Problems nur solche Maßnahmen tauglich erscheinen, die ohne allzu hohe Scherenergie auskommen, da andernfalls die blättchenförmigen Aluminiumbronzeteilchen zerstört werden und der erreichbare Metalleffekt leiden würde.

Aus der EP-A-0 038 127 sind wäßrige Basislacke für Metalleffekt-Zweischicht-Lackierungen auf der Grundlage eines teilvernetzten polymeren Mikrogels bekannt, das pseudoplastischen oder thixotropen Charakter besitzt. Die EP-A-0 069 936 betrifft ein Verfahren zur Herstellung wäßriger Dispersionen, die als Basislacke für Metalleffekt-Zweischicht-Lackierungen verwendet werden können, wobei ungesättigte Verbindungen in Gegenwart von Celluloseester polymerisiert werden. Beide Anmeldungen können jedoch die oben geschilderte Aufgabe nicht lösen. Die EP-A-0 021 414 befaßt sich mit mit Wasser verdünnbaren Bindemittelmischungen auf Basis eines wasserlöslichen, epoxydierte Öle enthaltenden Kondensationsprodukts. Die nachstehend vorgeschlagene Lösung der oben angesprochenen erfindungsgemäßen Aufgabe wird in dieser Vorveröffentlichung weder angesprochen noch nahegelegt.

Überraschenderweise führt ein Verfahren zum Ziel, wonach man einer Bindemitteldispersion auf Basis eines urethanmodifizierten, ölfreien Polyesterharzes bzw. eines urethanmodifizierten Alkydharzes, Pigment, Aluminiumbronze und einen Emulgator zugibt. Man erhält auf diese Weise einen unmittelbar applizierbaren wäßrigen Metalleffekt-Basislack für die Zweischicht-Lackierung. Daraus hergestellte Basislackierungen zeigen hervorragende Zwischenschichthaftung zum Klarlack und einen Metalleffekt, der beim Naß-in-Naß-Auftrag des Klarlacks störungsfrei erhalten bleibt.

Gegenstand der Erfindung ist ein Verfahren zur Herstellung eines wäßrigen Metalleffekt-Basislacks auf Basis von

A) 10-30 Gew.-Teilen ölfreiem Polyester und/oder Alkydharz,
B) 2,5-15 Gew.-Teilen wasserlösliches Aminoplastharz,
C) 2-10 Gew.-Teilen Aluminiumbronze,
D) 0,1-10 Gew.-Teilen nicht-löslichem Emulgator,
E) organischem Lösungsmittel und gegebenenfalls
F) weiteren Hilfsmitteln,

dadurch gekennzeichnet, daß man als Komponente A ein urethanmodifiziertes Harz verwendet, welches

(i) eine Hydroxylzahl von höchstens 150,
(ii) eine mittlere Funktionalität pro Molekül von 2,5-10,
(iii) einen mittleren Kondensationsgrad pro Molekül von 10-25 und
(iv) einen mittleren Urethangruppengehalt pro Molekül von 3-6 aufweist und
(v) Reste eingebauter 2,2-Di(hydroxymethyl) carbonsäuren und/oder der Hydroxypivalinsäure entsprechend einer Säurezahl von 15-30 enthält, die zu mindestens 80 % neutralisiert sind,

und dieses in Form einer wäßrigen Dispersion mit einem Festkörpergehalt von 30-50 Gew.-% mit den übrigen Komponenten mischt.

Weiterer Gegenstand der Erfindung ist die Verwendung von derart hergestellten Dispersionen zur Herstellung von Metalleffekt-Zweischicht-Lackierungen.

Die erfindungsgemäße Komponente A) besteht aus einem ölfreien Polyesterharz oder einem Alkydharz und besitzt eine mittlere Funktionalität pro Molekül von 2,5 bis 10, eine mittlere Funktionalität pro Molekül von 2,5 bis 10, einen mittleren Kondensationsgrad pro Molekül von 10 bis 25, wobei der Kondensationsgrad die Summe der Monomerbausteine in der Kette des Polymermoleküls angibt, einen mittleren Urethangruppengehalt pro Molekül von 3 bis 6 und Reste eingebauter 2.2-Di(hydroxymethyl) carbonsäuren und/oder Hydroxypivalinsäure entsprechend einer Säurezahl von 15 bis 30 enthalten, die zu mindestens 80 % neutralisiert sind.

Unter « Alkydharzen » werden in dieser Anmeldung fettsäure-, öl- und Isocyanat-modifizierte, d. h. urethanmodifizierte Polyester verstanden.

Für die Synthese der Polyester bzw. Alkydharze A bevorzugte Säurekomponenten sind aliphatische,

cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid, Pyromellithsäureanhydrid, Fumarsäure und Maleinsäure. Phthalsäureanhydrid ist die gebräuchlichste Säurekomponente. Die Polyester bzw. Alkydharze A sollen nicht mehr als 20 Mol-%, bezogen auf die einkondensierten Polycarbonsäurereste, Fumar- und Maleinsäurereste enthalten.

Für die Synthese der Polyester bzw. Alkydharze A bevorzugte Alkohole sind aliphatische, cycloaliphatische und/oder araliphatische Alkohole mit 1-15, vorzugsweise 2-6 C-Atomen, und 1-6, vorzugsweise 1-4, an nicht-aromatische C-Atome gebundenen OH-Gruppen pro Molekül, z. B. Glykole wie Ethylenglykol, Propandiol-1,2 und -1,3, Butandiol-1,2, -1,3, und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole wie Di- und Triethylenglykol, Dipropylenglykol; Dimethylolpropionsäure, oxalkylierte Bisphenole mit zwei $C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit; kettenabbrechende einwertige Alkohole mit 1 bis 8 Kohlenstoffatomen wie Propanol, Butanol, Cyclohexanol und Benzylalkohol, Hydroxypivalinsäure. Die gebräuchlichsten Alkohole sind Glycerin, Trimethylolpropan, Neopentylglykol und Pentaerythrit.

Für die Herstellung der Polyester bzw. Alkydharze A bevorzugte Monocarbonsäuren sind aliphatische, cycloaliphatische gesättigte und ungesättigte und/oder aromatische Monocarbonsäuren mit 3-24 C-Atomen pro Molekül wie Benzoesäure, p-tert.-Butylbenzoesäure, Tolylsäure, Hexahydrobenzoesäure, Abietinsäure und Milchsäure.

Die Alkydharze bzw. Polyester A können auch einwertige Alkohole wie Methanol, Propanol, Cyclohexanol, 2-Ethylhexanol, Benzylalkohol in Mengen bis zu 15 Gew.-%, bezogen auf Alkydharz bzw. Polyester A, einkondensiert enthalten. Ebenso ist es möglich, bis zu 25 % der Esterbindungen durch Urethanbindungen zu ersetzen.

In den Alkydharzen A beträgt die Öllänge, berechnet als Triglycerid und bezogen auf das Alkydharz, in der Regel 5 bis 50, vorzugsweise 20 bis 40 Gew.-%. Die trocknenden oder nichttrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z. B. Kokos-, Erdnuß-, Ricinus-, Holz-, Oliven-, Sojabohnen-, Lein-, Baumwollsaatöl, Saffloröl oder -ölfettsäuren, dehydratisiertes Ricinusöl bzw. -fettsäure, einfach ungesättigte Fettsäuren, Schmalz, Talg und Trane, Tallölfettsäure sowie synthetische Fettsäuren, die durch Konjugierung oder Isomerisierung aus natürlichen ungesättigten Ölen oder Fettsäuren hergestellt sein können. Bevorzugte gesättigte Fettsäuren sind z. B. Kokosölfettsäuren, α-Ethylhexansäure, Isononansäure (3, 4, 4-Trimethylhexansäure) sowie Palmitin- und Stearinsäure und synthetische gesättigte verzweigte Fettsäuren.

Das als Zahlenmittel bestimmte Molekulargewicht der Polyester bzw. Alkydharze A beträgt 2 000-10 000 (bis zu Molekulargewichten von 5 000 dampfdruckosmometrisch bestimmt in Dioxan und Aceton, wobei bei differierenden Werten der niedrigere Wert als korrekt angesehen wird; bei Molekulargewichten über 5 000 membranosmometrisch in Aceton bestimmt).

Bevorzugte Isocyanate für die Einführung der Urethangruppen in die Polyester bzw. Alkydharze I sind Polyisocyanate mit 4 bis 25, vorzugsweise 4 bis 16, C-Atomen und 2 bis 4, vorzugsweise 2, Isocyanatgruppen pro Molekül, also aliphatische, cycloaliphatische, araliphatische und aromatische Diisocyanate, wie sie beispielsweise in « Methoden der Organischen Chemie » (Houben-Weyl), Bd. 14/2, 4. Aufl., Georg Thieme Verlag, Stuttgart 1963, S. 61-70, und von W. Siefken, Liebigs Ann. Chem. 562, 75-136, beschrieben werden, z. B. 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat (« Isophorondiisocyanat », 2,5- und 3,5-Bis-(isocyanatomethyl)-8-methyl-1,4-methano-decahydronapthalin, 1,5-, 2,5-, 1,6- und 2,6-Bis(isocyanatomethyl)-4,7-methano-hexahydroindan, 1,5-, 2,5-, 1,6- und 2,6-Bis-(isocyanato)-4,7-methano-hexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyldiphenyl, 2,4'- und 4,4'-Diisocyanato-diphenylmethan, Naphthylen-1,5-diisocyanat, Toluylendiisocyanate wie 2,4- bzw. 2,6-Toluylen-diisocyanat, N,N'-(4,4'-Dimethyl-3,3'-Diisocyanatodiphenyl)-uretdion, m-Xylylen-diisocyanat, aber auch die Triisocyanate wie 2,4,4'-Triisocyanato-diphenylether, 4,4',4''-Triisocyanatotriphenylmethan, Tris(4-isocyanatophenyl)-thiophosphat, sowie beliebige Gemische dieser Isomeren.

Besonders bevorzugt werden in der Regel die technisch leicht zugänglichen aliphatischen und cycloaliphatischen Polyisocyanate, insbesondere Hexamethylendiisocyanat, 4,4'-Di(isocyanatocyclohexyl)-methan und 3-Isocyanatomethyl-3,5,5-trimethylcyclohexylisocyanat.

Wasserlösliche Aminoplastharze B im Sinne der Erfindung sind gegebenenfalls modifizierte und plastifizierte Harnstoffharze, Melaminharze sowie Guanamin- und Sulfonamidharze. Es handelt sich dabei jeweils um Kondensationsprodukte von Formaldehyd mit Harnstoff, Melamin, Guanamin und Sulfonamid, die üblicherweise im alkalischen Medium hergestellt werden.

Bevorzugte Emulgatoren D sind in Ullmann's Encyclopädie der technischen Chemie, 4. Auflage, Band 10, 449-473, Verlag Chemie, Weinheim 1975, und in McCutcheon's « Detergents & Emulsifiers », McCutcheon Division, Mc Publishing Co., Glen Rock, N.J. (1979) beschrieben.

Bevorzugte nichtionische Emulgatoren sind Verbindungen der Formel

$$R^1 — O — R^3{}_m H \; ; \; R^2 — CO — O — R^4{}_n H$$

worin $R^1$ und $R^2$ eine aliphatische, cycloaliphatische, araliphatische oder aromatische Gruppe mit 7-25 C-Atomen, $R^3$ und $R^4$ $C_2H_5O$, $C_3H_7O$ oder $C_4H_9O$ und m und n ganze Zahlen von 3 bis 100 bedeuten.

Ferner sind auch Oligomere und Polymere als Emulgatoren oder emulsionsstabilisierende Substanzen verwendbar. Darunter fallen z. B. Schutzkolloide wie Casein, teilweise und völlig verseiftes Polyvinylacetat, Polymerisate und Copolymerisate aus Vinylpyrrolidon.

Für die Herstellung der Emulgatoren D besonders bevorzugte Tenside sind Alkyl-, Acyl-, Aryl-, Alkylarylpolyglykolether, die 10-20 C-Atome im Alkyl-, Acyl, Aryl- oder Alkylarylrest aufweisen und durch Alkoxylierung von in der Tensidchemie üblichen Alkanolen, Carbonsäuren, Phenolen oder Alkylphenolen mit Ethylenoxid und/oder Propylenoxid entstehen. Bei diesen Ethylenoxid/Propylenoxid-mischethern kann es sich um in der Tensidchemie übliche Block-, Misch- oder Mischblockaddukte handeln.

Ganz bevorzugte Emulgatoren D sind solche, die sich von $C_{12}$-$C_{18}$-Alkyl- oder Octyl- oder Nonylphenylpolyethoxylaten ableiten, die im Mittel mehr als 10 Ethylenoxideinheiten und vorzugsweise mehr als 20 Ethylenoxideinheiten pro Molekül aufweisen, sowie deren Mischungen.

Bevorzugte organische Lösungsmittel E sind solche Lösungsmittel, die bei Raumtemperatur mit Wasser mischbar sind.

Weitere Hilfsmittel F sind beispielsweise Wasser, Verlaufshilfsmittel, Thixotropiermittel, wachsähnliche Stoffe, wie Ethylen-Copolymerisate, Netzmittel, Verdicker, Konservierungsmittel und Pigmente.

Die Herstellung kann im Prinzip so erfolgen, daß man aus den Komponenten C und E eine Paste herstellt, die man dann mit der Alkylharzdispersion auflackt. In der Regel wird man jedoch vorziehen, eine Mischung bestehend aus den Komponenten A-F herzustellen.

Beide Herstellungsmethoden gewährleisten, daß die Aluminiumbronze homogen in den einzelnen Teilchen der dispersen Phase verteilt ist.

Die Zweischicht-Metalleffekt-Lackierung kann bei Temperaturen von 80 bis 180 °C, vorzugsweise 110 bis 140 °C eingebrannt werden.

## Beispiel 1

a) Zusammensetzung der Alkydharzdispersion :

11,88 Gew.-% hydrierte $C_{16}$-$C_{18}$-Fettsäuren,
7,82 Gew.-% Trimethylolpropan,
3,32 Gew.-% Pentaerythrit,
7,57 Gew.-% Phthalsäureanhydrid,
2,48 Gew.-% Dimethylolpropionsäure,
8,31 Gew.-% « Isophoron » diisocyanat,
1,49 Gew.-% Triethylamin,
5,94 Gew.-% N-Methylpyrrolidon,
0,4 Gew.-% Polyethylenoxid (auf Nonylphenol gestartet, durchschnittliche 20 Ethylenoxideinheiten pro Molekül),
50,79 Gew.-% Wasser.
Säurezahl des Alkydharzes : 26, Hydroxyzahl des Alkydharzes : 144.

b) Lackherstellung :

(1) Aufschlämmung von 50 g Aluminiumpaste, 65 gew.-%-ig in Wasser (≙ 32,5 g Aluminium), in 50 g Butylacetat ;
Auflackung mit
144 g Alkydharzdispersion (a) (≙ 67,7 g Alkydharz),
35 g wasserlöslichem Melaminharz, 80 gew.-%-ig in Wasser (≙ 28 g Melaminharz),
20 g (3-Benzyl-4-hydroxy-biphenyl)-polyglykolether,
15 g wasserverdünnbarem Polyurethan (Borchigel L 75)
und
130 g Wasser zur Viskositätseinstellung.

c) Verarbeitung :

Der Lack (b) wurde mittels Spritzpistole auf ein grundiertes und gefülltes Karosserieteil aufgebracht. Nach 5 Minuten Ablüften wurde mit einem handelsüblichen, lösungsmittelhaltigen Acrylatharz überspritzt und bei 130 °C 30 Minuten eingebrannt.

d) Resultat :

Der Überzug zeigte einen hervorragenden Bronzestand (sowohl in Silbergrau als auch in Buntmetallic).

Beispiel 2

b) Anreibung in Bindemittel mit

4 g Aluminiumpaste, 65 gew.-%-ig in Testbenzin/Aromatengemisch (≙ 2,6 g Aluminium),
5 g Aluminiumpaste, 65 gew.-%-ig in Wasser (≙ 3,25 g Aluminium),
5 g Isopropanol,
5 g Butylacetat,
1 g (3-Benzyl-4-hydroxy-biphenyl)-polyglykolether,
1 g auf Sorbit gestartetem Polypropylenoxid (Funktionalität 4.3, OH-Gehalt 14.5 Gew.-%, Molekulargewicht ca. 500),
6 g Alkydharzdispersion 1 a, 47 gew.-%-ig in Wasser (≙ 2,82 g Alkydharz) ;
Auflackung mit
26 g Alkydharzdispersion 1 a, 47 gew.-%-ig in Wasser (≙ 12,22 g Alkydharz),
3 g wasserverdünnbarem Polyurethan (Borchigel L 75),
1 g (3-Benzyl-4-hydroxy-biphenyl)-polyglykolether,
1 g auf Sorbit gestartetem Polypropylenoxid (s.o.),
5 g wasserlöslichem Melaminharz, 80 gew.-%-ig in Wasser (≙ 4 g Melaminharz), und
30 g Wasser zur Viskositätseinstellung.

(c) und (d) wie in Beispiel 1.

**Patentansprüche**

1. Verfahren zur Herstellung eines wäßrigen Metalleffekt-Basislacks auf Basis von
A) 10-30 Gew.-Teilen ölfreiem Polyester und/oder Alkydharz,
B) 2,5-15 Gew.-Teilen wasserlösliches Aminoplastharz,
C) 2-10 Gew.-Teilen Aluminiumbronze,
D) 0,1-10 Gew.-Teilen nicht-löslichem Emulgator,
E) organischem Lösungsmittel und gegebenenfalls
F) weiteren Hilfsmitteln,
dadurch gekennzeichnet, daß man als Komponente A ein urethanmodifiziertes Harz verwendet, welches
(i) eine Hydroxylzahl von höchstens 150,
(ii) eine mittlere Funktionalität pro Molekül von 2,5-10,
(iii) einen mittleren Kondensationsgrad pro Molekül von 10-25 und
(iv) einen mittleren Urethangruppengehalt pro Molekül von 3-6 aufweist und
(v) Reste eingebauter 2,2-Di(hydroxymethyl) carbonsäuren und/oder der Hydroxypivalinsäure entsprechend einer Säurezahl von 15-30 enthält, die zu mindestens 80 % neutralisiert sind,
und diese in Form einer wäßrigen Dispersion mit einem Festkörpergehalt von 30-50 Gew.-% mit den übrigen Komponenten mischt.

2. Verwendung nach Verfahren gemäß Anspruch 1 hergestellter Dispersionen zur Herstellung von Metalleffekt-Zweischicht-Lackierungen.

**Claims**

1. A process for the production of an aqueous metal-effect base paint based on
A) 10 to 30 parts by weight oil-free polyester and/or alkyd resin,
B) 2.5 to 15 parts by weight water-soluble aminoplastic resin,
C) 2 to 10 parts by weight aluminium bronze,
D) 0.1 to 10 parts by weight insoluble emulsifier,
E) organic solvent and, optionally,
F) other auxiliaries,

characterized in that a urethane-modified resin which has

(i) a hydroxyl value of at most 150,

(ii) an average functionality per molecule of 2.5 to 10,

(iii) an average degree of condensation per molecule of 10 to 25 and

(iv) an average urethane group content per molecule of 3 to 6

and contains

(v) residues of incorporated 2,2-di(hydroxymethyl)-carboxylic acids and/or hydroxypivalic acid corresponding to an acid value of 15 to 30, of which at least 80 % are neutralized,

is used as component A) and is mixed in the form of an aqueous dispersion having a solids content of 30 to 50 % by weight with the other components.

2. The use of dispersions produced by the process claimed in claim 1 for the production of metal-effect two-layer paint finishes.

## Revendications

1. Procédé de production d'une peinture de base métallisée aqueuse à base de

A) 10 à 30 parties en poids de polyester dépourvu d'huile et/ou de résine alkyd,

B) 2,5 à 15 parties en poids de résine aminoplastique hydrosoluble,

C) 2 à 10 parties en poids de bronze d'aluminium,

D) 0,1 à 10 parties en poids d'émulsionnant non soluble,

E) un solvant organique et le cas échéant

F) d'autres adjuvants,

caractérisé en ce qu'on utilise comme composant A une résine modifiée par un uréthanne, qui présente

(i) un indice d'hydroxyle au maximum égal à 150,

(ii) une fonctionnalité moyenne par molécule de 2,5 à 10,

(iii) un degré moyen de condensation par molécule de 10 à 25 et

(iv) une teneur moyenne en groupes uréthanne par molécule de 3 à 6 et contient

(v) des restes d'acides 2,2-di(hydroxyméthyl) carboxyliques et/ou d'acide hydroxypivalique incorporés, correspondant à un indice d'acide de 15 à 30, qui sont neutralisés à 80 % au moins, et on mélange cette résine sous la forme d'une dispersion aqueuse à 30-50 % en poids de matières solides, avec les autres composants.

2. Utilisation de dispersions préparées par le procédé selon la revendication 1 pour la production de revêtements métallisés de peinture en deux couches.